# EUROPÄISCHE PATENTSCHRIFT

(11) **EP 1 253 034 B1**
(45) Veröffentlichungstag und Bekanntmachung des Hinweises auf die Patenterteilung: **05.04.2006**
(21) Anmeldenummer: 02008691.4
(22) Anmeldetag: 18.04.2002
(51) Int. Cl.: B60J 5/04, B60R 25/00

(54) **Seitenaufprallträger und Kraftfahrzeugtür**
Side impact beam for vehicle door
Poutre contre un choc latéral pour porte de véhicule

(30) Priorität: 27.04.2001 DE 10120935
(43) Veröffentlichungstag der Anmeldung: 30.10.2002
(73) Patentinhaber: Benteler Automobiltechnik GmbH, 33104 Paderborn (DE)
(72) Erfinder: Gehringhoff, Ludger, 33106 Paderborn (DE); Gossmann, Stefan, 33181 Bad Wünnenberg (DE)
(74) Vertreter: Ksoll, Peter

(56) Entgegenhaltungen:
- DE-U- 29 622 985
- US-A- 4 850 636
- US-A- 5 316 364
- US-B1- 6 398 289
- PATENT ABSTRACTS OF JAPAN vol. 2000, no. 15, 6. April 2001 (2001-04-06) & JP 2000 345754 A (MITSUI MINING & SMELTING CO LTD), 12. Dezember 2000 (2000-12-12)

## Beschreibung

Die Erfindung betrifft einen Seitenaufprallträger als Verstärkungsbauteil für die Fahrzeugtür eines Kraftfahrzeugs gemäß dem Oberbegriff von Anspruch und eine entsprechende Fahrzeugtür gemäß dem oberbegriff von Anspruch 5. Ein Seitenaufprallträger dieser Art, mit dazugehöriges Farhzeugtür, ist in DE 29622985 U. offenbart.

Seitenaufprallträger dienen dem Schutz der Pkw-Insassen vor Verletzungen bei einem seitlichen Aufprall. Sie kommen als Türverstärkung zum Einsatz. In Abhängigkeit von der Stabilität der Türgrundkonstruktion sollen sie eine hohe Steifigkeit quer zur Fahrtrichtung aufweisen.

Seitenaufprallträger sind im Stand der Technik in verschiedenen Ausführungsformen bekannt. Eine Rohrkonstruktion ebenso wie eine Faltkonstruktion eines Seiteaufprallträgers mit trapezförmig flach verbreiterten Endabschnitten sind bekannt. Die EP 0 662 053 C1 offenbart einen Seitenaufprallträger, der auf dem überwiegenden Teil seiner Länge ein im Querschnitt hutförmiges Profil aufweist, dessen Endabschnitte zu den Stirnseiten hin flach ausgebildet sind und sich verbreitem.

Durch die DE 296 22 985 U1 ist ein Seitenaufprallträger bekannt, bei dem an einem Ende eine aus dem ebenen Endabschnitt hochgebogene Anschlussfahne vorgesehen ist. Diese bildet einen Haken und ragt bei geschlossener Tür in eine der Türsäulen der Fahrzeugkarosserie hinein. Der Haken soll neben dem Türschloss eine zweite formschlüssige Verbindung herstellen und bei einem Seitenaufprall für eine zusätzliche Sicherung sorgen.

Der Einbau von Seitenaufprallträgern in die Fahrzeugtür erfolgt in der Regel über angeschweißte Blechlaschen oder mittels Schrauben als Sollbruchstelle, so dass es bei einem Frontalzusammenstoß zum Abscheren kommt. Hierdurch soll ein Verkeilen des Seitenaufprallträgers in der Fahrzeugtür nach einem Frontalzusammenstoß vermieden werden.

Die bekannten Seitenaufprallträger erfüllen je nach Ausführungsform ihre Hauptfunktion, nämlich die Seitenverstärkung der Fahrzeugtür, in der Regel sehr gut.

Bekanntlich sind Kraftfahrzeuge oft Ziel krimineller Machenschaften mit Einbruch oder Diebstahl. Bei einer bekannten Manipulationstechnik zum Öffnen einer Kraftfahrzeugtür wird ein Manipulationswerkzeug durch vorhandene Öffnungen an der Türaußenhaut, beispielsweise den Cliplöchern für die Befestigung einer Zierleiste, in die Fahrzeugtür eingeführt, so dass man an die Betätigungsmechanik für die Türverriegelung gelangt und die Fahrzeugtür öffnen kann.

Generell führen derartige Manipulationen zu materiellen Schäden bei den Betroffenen und unnötigem behördlichen und versicherungstechnischen Aufwand.

Der Erfindung liegt daher die Aufgabe zugrunde, einen Seitenaufprallträger und eine Kraftfahrzeugtür dahingehend zu verbessern, dass eine Manipulation der Türverriegelung über Öffnungen in der Außenhaut der Kraftfahrzeugtür unterbunden, zumindest jedoch deutlich erschwert wird.

Die Lösung dieser Aufgabe besteht in einem Seitenaufprallträger gemäß den Merkmalen von Anspruch 1 bzw. einer Fahrzeugtür in der Ausgestaltung nach Anspruch 5.

Der erfindungsgemäße Seitenaufprallträger weist am, vorzugsweise B-säulenseitigen, Anbindungsabschnitt, also in dem Bereich, der der Türverriegelung benachbart ist, ein vom Anbindungsabschnitt quer vorstehendes Sperrelement auf, welches den Abstand zwischen der Außenhaut der Fahrzeugtür und dem Türinnenblech zumindest teilweise verschließt. Das Sperrelement ist integrierter, einstückiger Bestandteil des Seitenaufprallträgers. Durch das Sperrelement wird der den Zugriff zur Betätigungsmechanik der Türverriegelung behindert. Auf diese Weise kann ein unerlaubtes bzw. unvorschriftsmäßiges Öffnen der Fahrzeugtür von außen durch eine Öffnung in der Türaußenhaut verhindert, zumindest jedoch auch in zeitlicher Hinsicht so erschwert werden, dass eine Manipulation uninteressant wird. Eine manipulierende Person ist in der Regel an einem möglichst schnellen Zugriff interessiert. Dies wird durch die erfindungsgemäße Ausgestaltung des Seitenaufprallträgers bzw. der Kraftfahrzeugtür unterbunden. Die Person wird in der Regel auch zukünftig von gleichen Kraftfahrzeugtypen, die erfindungsgemäß ausgerüstet sind, abgehalten, zumindest was die bekannte Manipulationstechnik anbelangt. Mithin trägt die Erfindung zu einer weiteren Erhöhung der Fahrzeugsicherheit gegen Einbruch und/oder Diebstahl bei.

Die Manipulation einer Kraftfahrzeugtür wird zuverlässig erschwert, wenn das Sperrelement den Abstand zwischen der Außenhaut und dem Innenblech der Fahrzeugtür um mehr als die Hälfte verschließt (Anspruch 2). Damit wird das Vordringen mit einem Manipulationswerkzeug über eine Öffnung in der Außenhaut der Fahrzeugtür bis zur Betätigungsmechanik der Türverriegelung nahezu unmöglich. Falls erforderlich, können endseitig am Vorsprung ergänzende Maßnahmen vorgesehen werden, wie Abkantungen oder Umstellungen, so dass ein Manipulationsvorgang zusätzlich erschwert wird.

Gemäß den Merkmalen von Anspruch 3 ist das Sperrelement als eine hakenförmige Lasche am Anbindungsbereich ausgebildet. Diese Ausgestaltung ist effizient in der Manipulationsabwehr und zudem fertigungstechnisch rationell. Auch der Einbau des Seitenaufprallträgers in die Kraftfahrzeugtür erfordert im Grunde keine Abweichung von der bisherigen Fertigungstechnik. Vorzugsweise ist die Lasche am oberen freien Ende des Anbindungsbereichs angeordnet, wie dies Anspruch 4 vorsieht.

Die Erfindung ist nachfolgend anhand eines in den Zeichnungen dargestellten Ausführungsbeispiels näher erläutert. Es zeigen:
- Figur 1: in perspektivischer Darstellungsweise den B-säulenseitigen Endabschnitt eines Seitenaufprallträgers und
- Figur 2: technisch schematisiert eine vertikale Schnittdarstellung durch eine Fahrzeugtür im Bereich des B-säulenseitigen Endes.

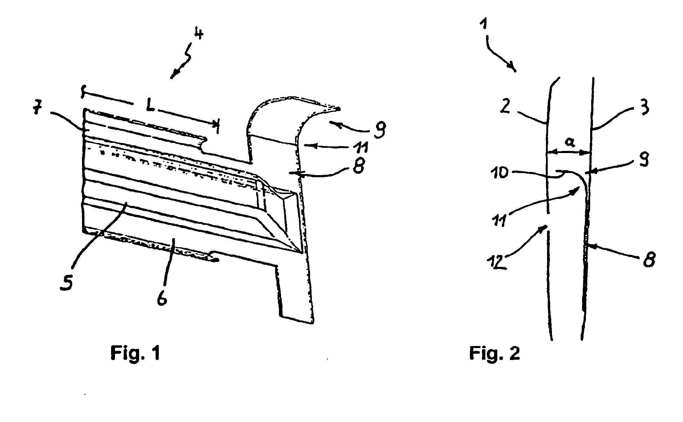

Figur 2 zeigt einen Ausschnitt einer Fahrzeugtür 1 für einen Personenkraftwagen. Die Außenhaut 2 der Fahrzeugtür 1 ist in Fahrzeuglängsrichtung leicht nach außen gewölbt. Mit horizontalem Abstand a zur Außenhaut 2 ist das Türinnenblech 3 angeordnet.

In die Fahrzeugtür 1 ist zwischen der Außenhaut 2 und dem Türinnenblech 3 ein Seitenaufprallträger 4 eingegliedert. Der Seitenaufprallträger 4 besteht aus Metallblech und soll die Fahrzeugtür 1 bei einem Seitenaufprall quer versteifen und die aus dem Crash resultierende Energie absorbieren.

Wie die Figur 1 zeigt, weist das der Seitenaufprallträger 4 über seinen mittleren Längenabschnitt L ein hutförmiges Längsprofil 5 auf mit zwei seitlichen Schenkeln 6, 7. An das Profil 5 gliedern sich einstückig Anbindungsabschnitte an, von denen hier der B-säulenseitige Anbindungsabschnitt 8 dargestellt ist.

Am Anbindungsabschnitt 8 ist ein von diesem quer vorstehendes, den Abstand a zwischen Außenhaut 2 und Innenblech 3 nahezu vollständig verschließendes Sperrelement 9 vorgesehen. Das Sperrelement 9 ist als eine hakenförmige Lasche 10 am oberen freien Ende 11 des Anbindungsbereichs 8 ausgebildet und überbrückt den Abstand a um mehr als die Hälfte. Hierdurch wird das Einführen eines Manipulationswerkzeugs, beispielsweise ein Draht, durch eine Öffnung 12 in der Türaußenhaut 2 bis zur Betätigungsmechanik der Türverriegelung nahezu unmöglich. Bei dem hier dargestellten Ausführungsbeispiel handelt es sich bei der Öffnung 12 um ein Cliploch zur Befestigung einer Zierleiste an der Außenhaut 2 der Fahrzeugtür 1.

Durch das Sperrelement 9 wird der Manipulationsvorgang so erschwert, dass er gar oder zumindest nicht in kurzer Zeit zu bewerkstelligen ist. Auf diese Weise können kriminelle Machenschaften und ein unerlaubtes Öffnen der Fahrzeugtür 1 vermieden werden.

### Bezugszeichenaufstellung

- 1 -: Fahrzeugtür
- 2 -: Außenhaut
- 3 -: Türinnenblech
- 4 -: Seitenaufprallträger
- 5 -: Längsprofil
- 6 -: Schenkel
- 7 -: Schenkel
- 8 -: Anbindungsabschnitt
- 9 -: Sperrelement
- 10 -: Lasche
- 11 -: oberes freies Ende v. 8
- 12 -: Öffnung

- a -: Abstand
- L -: Längenabschnitt

## Patentansprüche

1. Seitenaufprallträger zur Eingliederung zwischen der Außenhaut (2) und dem Innenblech (3) der Fahrzeugtür (1) eines Kraftfahrzeugs, welcher ein Längsprofil (5) mit einem Anbindungsabschnitt (8) besitzt, **dadurch gekennzeichnet, dass** am Anbindungsabschnitt (8) ein von diesem quer vorstehendes den Abstand (a) zwischen Außenhaut (2) und Innenblech (3) zumindest teilweise verschließendes Sperrelement (9) vorgesehen ist.

2. Seitenaufprallträger nach Patentanspruch 1, **dadurch gekennzeichnet, dass** das Sperrelement (9) den Abstand (a) um mehr als die Hälfte verschließt.

3. Seitenaufprallträger nach Patentanspruch 1 oder 2, **dadurch gekennzeichnet, dass** das Sperrelement (9) als eine hakenförmige Lasche (10) am Anbindungsbereich (8) ausgebildet ist.

4. Seitenaufprallträger nach Patentanspruch 3, **dadurch gekennzeichnet, dass** die Lasche (10) am oberen freien Ende (11) des Anbindungsabschnitts (8) angeordnet ist.

5. Fahrzeugtür für ein Kraftfahrzeug, wobei zwischen der Außenhaut (2) und dem Innenblech (3) der Fahrzeugtür (1) ein Seitenaufprallträger (4) eingegliedert ist und innerhalb der Fahrzeugtür (1) Bauteile der Betätigungsmechanik für die Türverriegelung angeordnet sind, **dadurch gekennzeichnet, dass** am B-säulenseitigen Anbindungsabschnitt (8) des Seitenaufprallträgers (4) zumindest ein den Zugriff zur Betätigungsmechanik behinderndes Sperrelement (9) vorgesehen ist.

## Claims

1. Side impact beam for incorporating between the outer skin (2) and the inner sheet (3) of the vehicle door (1) of a motor vehicle, which side impact beam has a longitudinal profile (5) with a connecting section (8), **characterized in that** a blocking element (9) is provided on the connecting section (8), this blocking element (9) projecting transversely from the latter and at least part closing the distance (a) between outer skin (2) and inner sheet (3).

2. Side impact beam according to Patent Claim 1, **characterized in that** the blocking element (9) closes the distance (a) by more than half.

3. Side impact beam according to Patent Claim 1 or 2, **characterized in that** the blocking element (9) is designed as a hook-shaped lug (10) on the connecting region (8).

4. Side impact beam according to Patent Claim 3, **characterized in that** the lug (10) is arranged on the top free end (11) of the connecting section (8).

5. Vehicle door for a motor vehicle, a side impact beam (4) being incorporated between the outer skin (2) and the inner sheet (3) of the vehicle door (1), and components of the actuating mechanism for the door locking being arranged inside the vehicle door (1), **characterized in that** at least one blocking element (9) hindering the access to the actuating mechanism is provided on the B-pillar-side connecting section (8) of the side impact beam (4).

## Revendications

1. Poutre contre les chocs latéraux pour incorporation entre le bordé (2) et la tôle intérieure (3) de la portière d'un véhicule automobile (1), qui présente un profil longitudinal (5) avec un tronçon de raccordement (8), **caractérisée en ce que**, sur le tronçon de raccordement (8), est prévu un élément de blocage (9) faisant saillie transversalement par rapport à ce tronçon de raccordement (8) et bloquant au moins partiellement la distance (a) entre le bordé (2) et la tôle intérieure (3).

2. Poutre contre les chocs latéraux selon la revendication 1, **caractérisée en ce que** l'élément de blocage (9) bloque la distance (a) de plus de la moitié.

3. Poutre contre les chocs latéraux selon la revendication 1 ou la revendication 2, **caractérisée en ce que** l'élément de blocage (9) est configuré en tant qu'attache (10) en forme de crochet sur la zone de raccordement (8).

4. Poutre contre les chocs latéraux selon la revendication 3, **caractérisée en ce que** l'attache est agencée sur l'extrémité libre supérieure (11) du tronçon de raccordement (8).

5. Portière pour véhicule automobile dans laquelle, entre le bordé (2) et la tôle intérieure (3) de la portière (1), est incorporée une poutre contre les chocs latéraux (4) et, à l'intérieur de la portière de véhicule (1), sont agencés les éléments constitutifs du mécanisme d'actionnement pour le verrouillage de portière, **caractérisée en ce que**, sur le tronçon de raccordement (8) côté colonne B de la poutre contre les chocs latéraux (4) est prévu au moins un élément de blocage (9) empêchant l'accès au mécanisme d'actionnement.
